# EUROPÄISCHE PATENTSCHRIFT

(11) **EP 1 125 794 B1**
(45) Veröffentlichungstag und Bekanntmachung des Hinweises auf die Patenterteilung: **30.07.2003**
(21) Anmeldenummer: 00120277.9
(22) Anmeldetag: 28.09.2000
(51) Int. Cl.: B60R 1/074

(54) **Aussenrückblickspiegel für ein Kraftfahrzeug**
Vehicle rear view mirror
Rétroviseur pour véhicule

(30) Priorität: 16.02.2000 DE 10006913
(43) Veröffentlichungstag der Anmeldung: 22.08.2001
(73) Patentinhaber: Bühler Motor GmbH, 90459 Nürnberg (DE)
(72) Erfinder: Böhm, Karl-Heinz, 91364 Unterleinleiter (DE)

(56) Entgegenhaltungen:
- WO-A-97/43144
- DE-A- 19 813 039

## Beschreibung

Die Erfindung betrifft einen Außenrückblickspiegel für ein Kraftfahrzeug, mit einem am Kraftfahrzeug zu befestigenden Spiegelfuß, einem ein Spiegelglas tragenden, um eine Schwenkachse schwenkbaren Spiegelkopf, der durch einen in einem mehrteiligen Antriebsgehäuse angeordneten selbsthemmenden Antrieb antreibbar ist, bestehend aus einem axial in Bezug auf das Antriebsgehäuse geringfügig in Achsrichtung verschiebbaren Elektromotor, dessen Ausgangswelle getrieblich mit einem Untersetzungsgetriebe in Eingriff ist, dessen Ausgangszahnrad über ausrastbare Rastmittel unter der Kraftwirkung einer Druckfeder mit dem Spiegelfuß in Eingriff gehalten ist, wobei der Spiegelkopf unter der Einwirkung einer äußeren Kraft aus einer Gebrauchslage (F bis P) um die Schwenkachse an das Kraftfahrzeug anklappbar ist, wobei der Spiegelkopf durch die ausrastbaren Rastmittel mitnehmbar ist und dabei gegenüber dem Spiegelfuß entlang der Schwenkachse eine Relatiwerschiebung ausführen kann, die durch ein im Antriebsgehäuse angeordnetes elektromechanisches oder elektronisches Mittel erkennbar ist und die Motoranschlüsse an einer Vielzahl von unterschiedlichen Stellen auf einer Umfangslinie des Antriebsgehäuses aus diesem herausführbar sind. Ein derartiger Außenrückblickspiegel ist allgemein bekannt.

Bei einem bekannten Außenrückblickspiegel der oben genannten Gattung sind die elektromechanischen oder elektronischen Mittel und die Motoranschlüsse mit Litzenleitem verlötet bzw. vercrimpt, welche durch das Antriebsgehäuse nach außen geführt werden. Diese Litzenleiter sind Teil eines Kabelbaums der weitere elekrische Verbraucher im Außenspiegel mit der Fahrzeugelektrik verbindet. Die elektromechanischen oder elektronischen Mittel sind aus technischen Gründen an einer relativ unzugänglichen Stelle innerhalb des Antriebsgehäuses angeordnet, und ihre Anschlüsse sind entfernt von den Anschlüssen des Elektromotors. Daher ist der Montageaufwand für die Einführung der bereits vorher mit dem Kabelbaum verlöteten bzw. vercrimpten Bauteile in das Antriebsgehäuse relativ groß. Um das Anlaufen des Elektromotors aus einer blockierten Stellung zu erleichtem, weist der bekannte Außenrückblickspiegel einen in Achsrichtung geringfügig beweglichen Elektromotor auf. Durch den verschiebbaren Elektromotor kann die Motorwelle zunächst beschleunigen, bevor das Getriebe betätigt werden muss. Aus Flexibilitätsgründen soll der Anschluß für den Elektromotor an einer Vielzahl von Stellen auf einem Umfang um das Antriebsgehäuse aus diesem herausführbar sein. Soll neben dem Motor auch das elektromechanische oder elektronische Mittel mit angeschlossen werden, ist eine Steckerlösung ungünstig.

Daher ist es Aufgabe der vorliegenden Erfindung einen Außenrückblickspiegel der genannten Gattung so zu gestalten, dass eine relativ beliebige Herausführung der Motoranschlüsse und ein sicheres Herausfahren aus einer blockierten Stellung möglich bleibt und der Außenrückblickspiegel dennoch einfach montierbar ist.

Diese Aufgabe wird bei einem gattungsgemäßen Außenrückblickspiegel erfindungsgemäß dadurch gelöst, dass der Antrieb über eine erste Steckerbuchse, die Bestandteil eines ersten Teils des Antriebsgehäuses ist und das elektromechanische oder elektronische Mittel über eine zweite Steckerbuchse, die Bestandteil eines zweiten Teils des Antriebsgehäuses ist, mit einer Steuerung im Kraftfahrzeug elektrisch verbindbar sind, wobei die erste Steckerbuchse über erste Leitbleche mit dem Elektromotor und die zweite Steckerbuchse über zweite Leitbleche mit dem elektromechanischen oder elektronischen Mittel elektrisch verbunden sind, die erste Steckerbuchse in Bezug auf die zweite Steckerbuchse in einer Vielzahl von unterschiedlichen Stellungen montierbar ist und die Leitbleche zwischen der ersten Steckerbuchse und dem Elektromotor in Achsrichtung des Elektromotors nachgiebig sind. Durch die Verwendung von zwei Steckerbuchsen ist keine aufwendige Leitungsverbindung zwischen dem Elektromotor und dem elektromechanischen oder elektronischen Mittel notwendig, dadurch vereinfacht sich die Montage erheblich. Durch die nachgiebigen Leitbleche wird die Axialbeweglichkeit des Elektromotors auch bei Verwendung von Steckerbuchsen möglich. Dies erlaubt einen sicheren Anlauf des Elektromotors aus einer blockierten Stellung. Durch die Anordnung der Steckerbuchsen auf unterschiedlichen Antriebsgehäusebauteilen ist eine nahezu beliebige Herausführung der Motoranschlüsse aus dem Antriebsgehäuse möglich. Die Steckerposition für das elektromechanische oder elektronische Mittel ist ortsfest.

Weitere vorteilhafte Varianten der Erfindung werden in den Unteransprüchen näher dargestellt.

Eine Vielzahl von Stellungen zwischen der ersten Steckerbuchse und der zweiten Steckerbuchse ist dadurch möglich, dass zwischen dem Antriebsgehäuseteil, mit dem die erste Steckerbuchse einstückig ist und einem weiteren Antriebsgehäuseteil eine Verzahnung vorgesehen ist, deren Zahnteilung die Anzahl der Stellungen definiert.

Durch Verwendung einer Kronradverzahnung zwischen dem ersten Antriebsgehäuseteil und einem dritten Antriebsgehäuseteil als Verdrehsicherung ist eine besonders wirtschaftliche Fertigung der Antriebsgehäuseteile möglich, weil keine Hinterschnitte, die nachteilig bei der Entformung der Formteile wären, durch die geometrische Anordnung der Verzahnung vorgesehen werden müssen.

Eine einfache Montage der Antriebsgehäuseteile ist durch Schnappmittel gegeben, die an beliebigen Positionen um das Antriebsgehäuse schnappbar sind, wobei sie das erste Antriebsgehäuseteil am dritten Antriebsgehäuseteil halten und dabei die Anzahl der möglichen Stellungen der ersten Steckerbuchse nicht einschränken.

Eine bevorzugte Ausführungsform der Erfindungen sieht vier Antriebsgehäuseteile vor, wobei das erste Antriebsgehäuseteil mit der ersten Steckerbuchse einstückig ist, das zweite Antriebsgehäuseteil mit der zweiten Steckerbuchse einstückig ist und ein viertes Antriebsgehäuseteil über eine Schiebeverbindung mit dem ersten Antriebsgehäuseteil verbunden ist. Diese Anordnung ermöglicht eine noch einfachere Montage des Elektromotors mit den ersten Leitblechen in die erste Steckerbuchse, indem die Steckerbuchse seitlich auf die Leitbleche geschoben wird und anschließend der Motor in das zweite und dritte Antriebsgehäuseteil eingesetzt und schließlich das vierte Antriebsgehäuseteil in Axialrichtung des Motors in die Schiebeverbindung zum ersten Antriebsgehäuseteil und in die Verzahnung und die Schnappmittel des dritten Antriebsgehäuseteils montiert wird.

Zweckmäßigerweise ist auch das zweite Antriebsgehäuseteil am dritten Antriebsgehäuseteil über Schnappmittel gehalten.

Auch bei Verwendung von vier Antriebsgehäuseteilen ist, wie oben beschrieben, eine Kronradverzahnung und eine Schnappverbindung, in diesem Fall zwischen dem dritten Antriebsgehäuseteil und dem vierten Antriebsgehäuseteil, von Vorteil.

Vorteilhafterweise werden für die Verbindung zwischen den Leitblechen und dem Elektromotor bzw. dem elektromechanischen oder elektronischen Mittel Klemmverbindungen vorgesehen. Diese sind prozesssicherer herzustellen und umweltfeundlicher als Lötverbindungen.

Die Erfahrung hat gezeigt, dass als elektomechanisches oder elektronisches Mittel zur Erkennung des Ausrastzustandes ein Mikroschalter sehr gut geeignet ist. Es ist zweckmäßig, beide steckerbuchsen gleichartig auszubilden, um die Anzahl unterschiedlicher Teile zu reduzieren. Weiter ist ein Verpolschutz durch entsprechende Formgebung der Steckerbuchsen auf einfache Weise zu realisieren, indem zwei unterschiedlich breite Buchseninnenseiten vorgesehen werden. Bei Verwendung von zwei Anschlusspins je Steckerbuchse können einfache handelsübliche Stecker eingesetzt werden.

Der erfindungsgemäße Außenrückblickspiegel zeichnet sich vor allem durch flexible Anschlussmöglichkeiten aus. Dabei können die beiden Steckerbuchsen (10, 11) zueinander senkrecht, parallel oder antiparallel angeordnet sein.

Ein Ausführungsbeispiel der Erfindung wird nachfolgend anhand der Zeichnung näher erläutert.

Es zeigen:
- Fig. 1: eine räumliche Darstellung eines Antriebs für einen erfindungsgemäßen Außenrückblickspiegel,
- Fig. 2: eine räumliche Darstellung eines Antriebsmotors und eines Mikroschalters,
- Fig. 3: eine Schnittdarstellung eines Teils des Antriebs,
- Fig. 4: eine Schnittdarstellung des Antriebs (ohne Getriebe),
- Fig. 5: eine Explosionsdarstellung von Teilen des Antriebes,
- Fig. 6: eine Ansicht des Außenrückblickspiegels und
- Fig. 7: eine Darstellung der möglichen Stellungen des Außenrückblickspiegels.

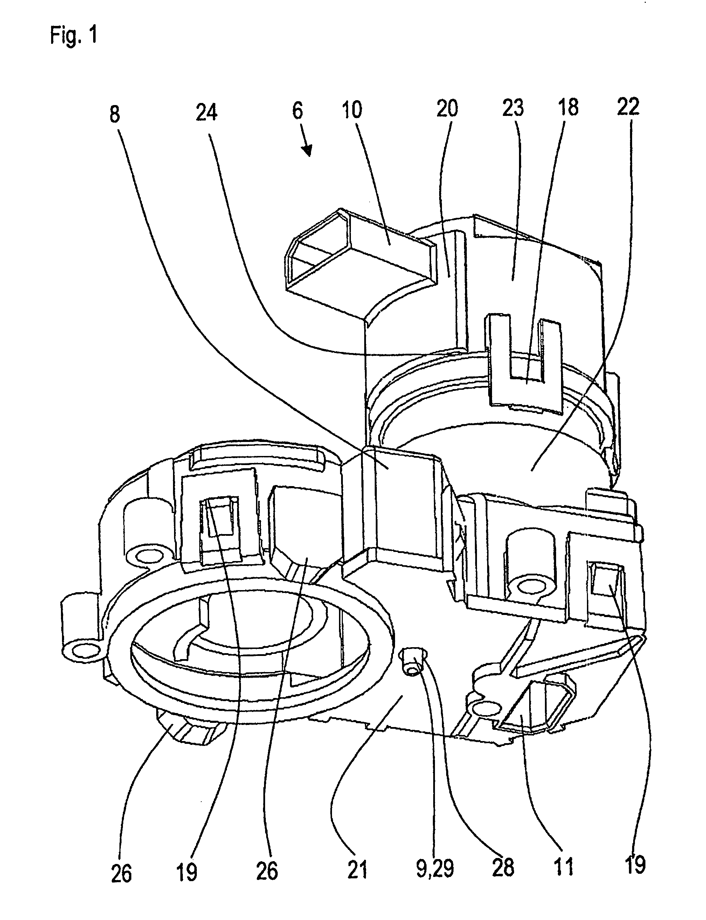

Die Fig. 1 zeigt eine räumliche Darstellung eines Antriebs 6 für einen erfindungsgemäßen Außenrückblickspiegel, mit einem Antriebsgehäuse 8, bestehend aus einem ersten Antriebsgehäuseteil 20, das mit einer ersten Steckerbuchse 10 einstückig ist, einem zweiten Antriebsgehäuseteil 21, das mit einer zweiten Steckerbuchse 11 einstückig ist, sowie eine Ausnehmung 28 für den Durchgang eines als Tastschalter 29 ausgebildeten elektronischen Mittels 9 aufweist und mit einem dritten Antriebsgehäuseteil 22, das Fahrwegbegrenzer 26 aufweist, über Schnappmittel 19 mit dem zweiten Antriebsgehäuseteil 21 verbunden ist und einem vierten Antriebsgehäuseteil 23, das mit dem ersten Gehäusteil über eine Schiebeverbindung 24 und mit dem dritten Antriebsgehäuseteil 22 über Schnappmittel 18 verbunden ist. Die beiden Steckerschächte 10 und 11 können relativ zueinander in nahezu beliebig vielen Stellungen angeordnet werden. Dadurch kann der Antrieb auf unterschiedliche Einbaubedingungen abgestimmt werden. Der Tastschalter dient zur Erkennung einer von einer äußeren auf den Rückblickspiegel wirkenden Kraft herbeigeführten Situation, in der der Antrieb und der Außenrückblickspiegel sich in einer abgehobenen Position befinden.

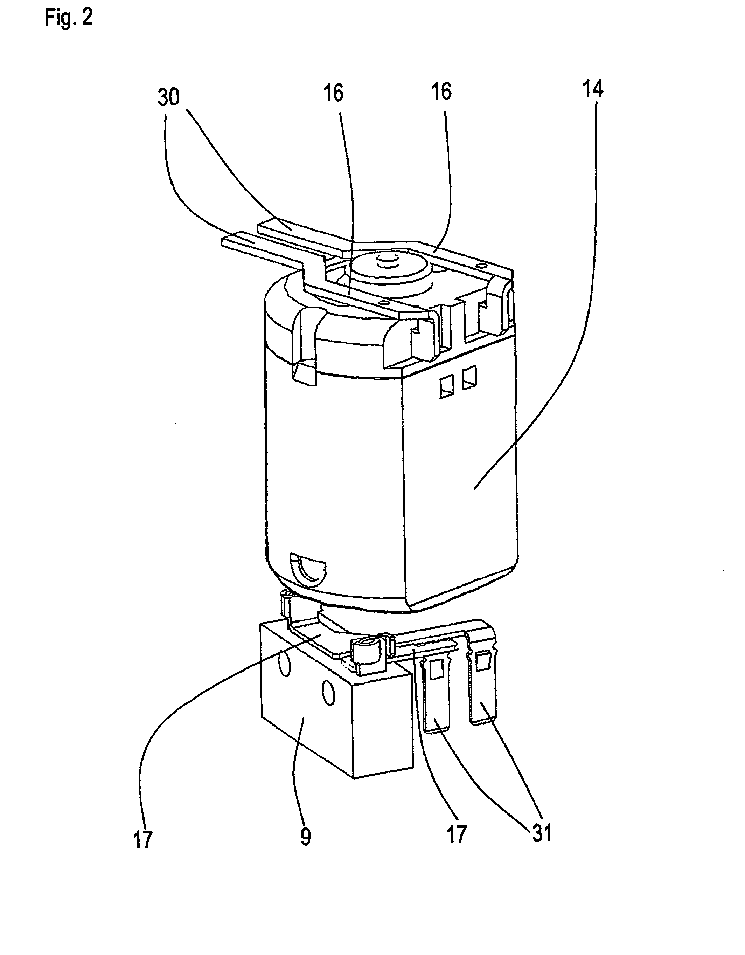

Fig. 2 zeigt einen Elektromotor 14 und einen Mikroschalter 9 in einer von vielen möglichen Anordnungen zueinander, wobei der Elektromotor 14 in unterschiedlichen Stellungen um seine eigene Achse einbaubar ist. Sowohl der Elektromotor 14, als auch der Mikroschalter 9 ist mit Leitblechen 16 bzw. 17 elektrisch und mechanisch verbunden. Ein Ende der Leitbleche 16 ist mit dem Elektromotor 14 durch Einstecken verbunden und das andere Ende dient als Steckerzunge 30. Ein Ende der Leitbeche 17 ist durch Stecken mit dem Mikroschalter 9 elektrisch und mechanisch verbunden und das andere Ende dient als Steckerzunge 31. Die Steckerzungen 30 sind im Steckerschacht 10 und die Steckerzungen 31 im Steckerschacht 11 angeordnet und dort form- und oder kraftschlüssig befestigt. Die Leitbleche 16 sind auf der den Steckerzungen 30 und dem Steckerschacht 10 abgewandten Seite des Elektromotors 14 mit diesem verbunden. Dadurch ergibt sich ein größerer Federarm, damit der Elektromotor 14 axial geringfügig beweglich bleibt. Ein weiterer Vorteil besteht in der wesentlich längeren Kriechstrecke für Feuchtigkeit; ähnliches gilt für die Leitbleche 17.

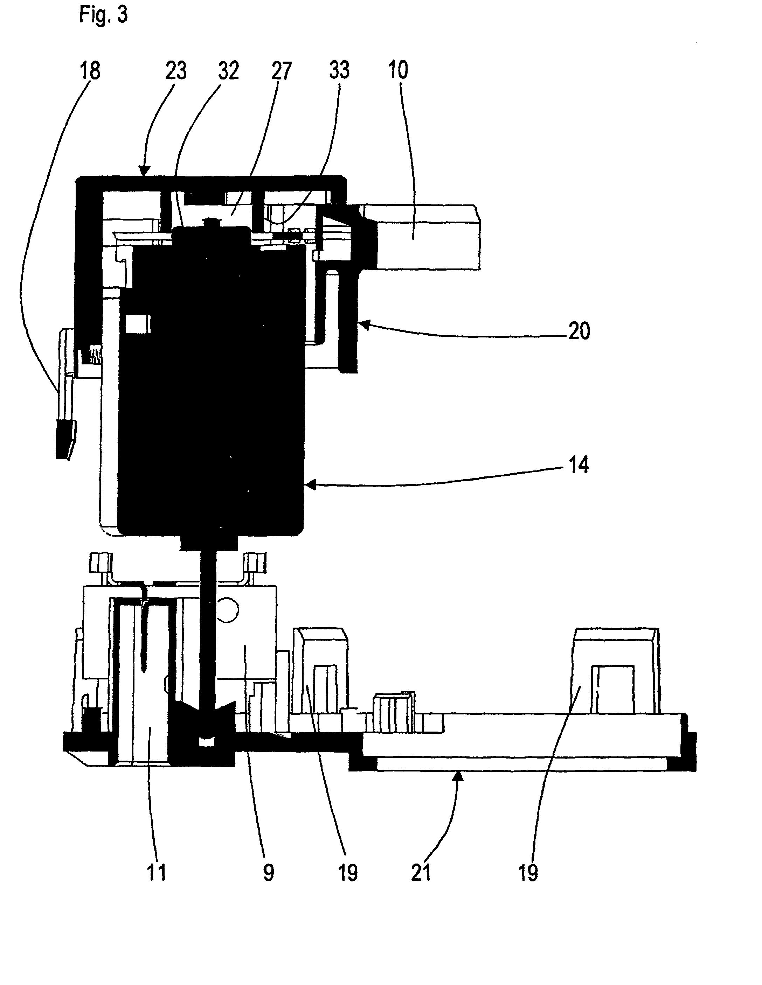

Fig. 3 zeigt eine Schnittansicht durch den Elektromotor 14, das erste Antriebsgehäuseteil 20 mit dem Steckerschacht 10, das zweite Antriebsgehäuseteil 21 mit dem Steckerschacht 11 sowie Schnappmitteln 19 und das vierte Antriebsgehäuseteil 23 mit den Schnappmitteln 18. Zwischen dem Elektromotor 14 und dem vierten Antriebsgehäuseteil 23 ist ein Bewegungsspielraum 27 vorgesehen, so dass sich der Elektromotor 14 beim Anlaufen geringfügig axial bewegen kann, um leichter anlaufen zu können. Radial ist ein Motoransatz 32 des Elektromotors 14 in einer Ausnehmung 33 im vierten Antriebsgehäuseteil 23 gehalten.

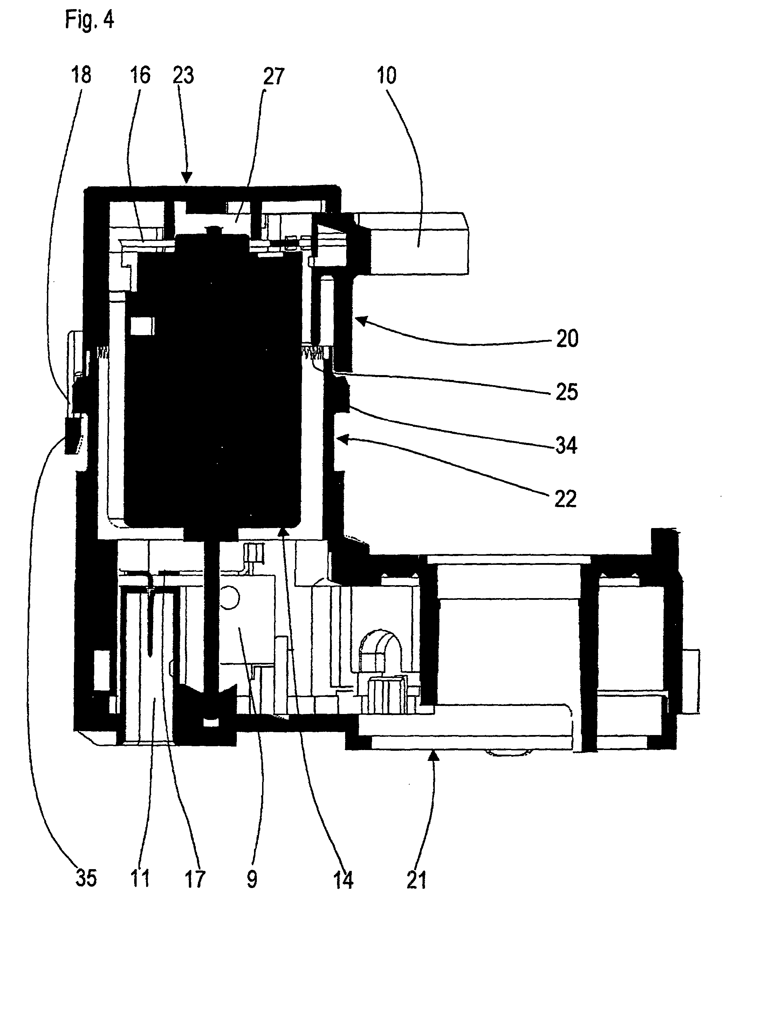

In Fig. 4 ist die gleiche Schnittdarstellung wie in Fig. 3 dargestellt, hier mit allen Antriebsgehäuseteilen 20, 21, 22 und 23. Der Elektromotor 14 ist über die Leitbleche 16 mit dem Steckerschacht 10 und der Mikroschalter 9 über die Leitbleche 17 mit dem Steckerschacht 11 verbunden. Die Schnappmittel 18 bestehen aus einem starren Schnappring 34 und elastischen Schnappnasen 35. Durch die Schnappmittel 18 ist jede beliebige Stellung der Antriebsgehäuseteile 20 und 23 um die Motorachse sowie in Bezug auf die Antriebsgehäuseteile 21 und 22 und zwischen den Steckerschächten 10 und 11 möglich. Die Zahl der Stellungen wird nur durch die Zahnteilung einer Kronradverzahnung 25 zwischen dem dritten Antriebsgehäuseteil 22 und dem vierten Antriebsgehäuseteil 23 eingeschränkt.

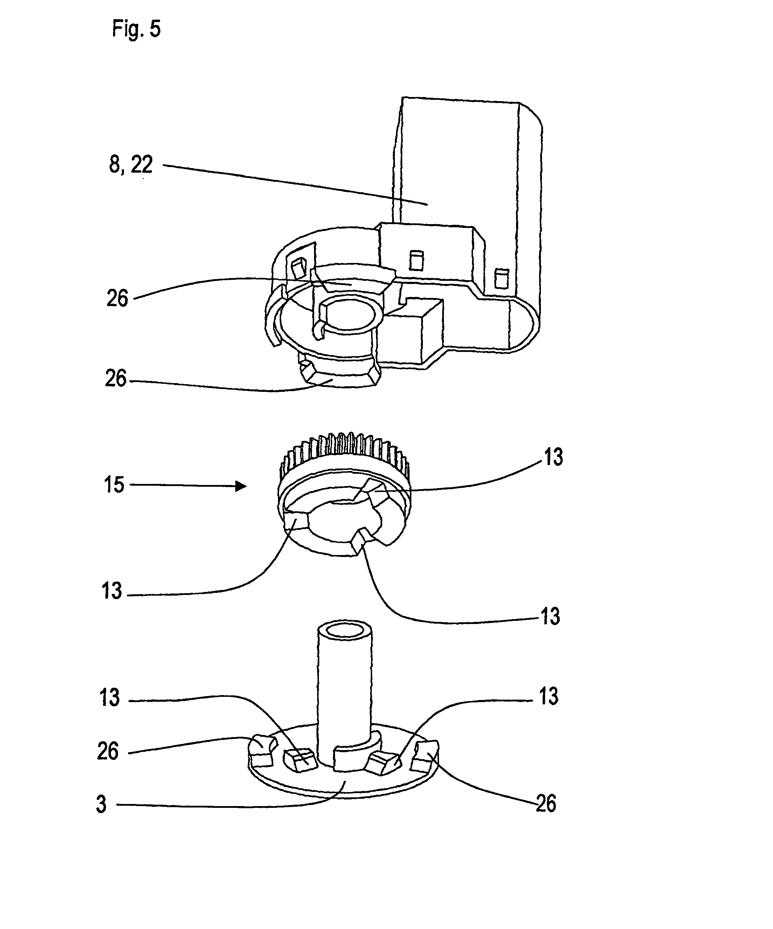

Fig. 5 zeigt eine Explosionsdarstellung von Teilen des Antriebes, mit dem dritten Antriebsgehäuseteil 22, einem Teil des Untersetzungsgetriebes 15 in Form eines Schneckenrades und einem Spiegelfuß 3, der fest mit der Karosserie eines Kraftfahrzeugs verbunden ist. Das Untersetzungsgetriebe 15 ist ein zweistufiges Schneckengetriebe, das selbsthemmend ausgeführt ist. Das gezeigte Schneckenrad weist Rastmittel 13 in Form von Rastausnehmungen auf, die im montierten Zustand zwischen einer Fahr- und einer Parkstellung mit Rastmitteln 13 am Spiegelfuß 3 in Form von Rastnocken eingerastet sind. Die Rastmittel sind seitlich mit Schrägen versehen, die bei Einwirkung einer äußeren Kraft auf den Spiegel ein Ausrasten der Rastmittel erlauben. Aus dem gleichen Grund sind auch die Fahrwegbegrenzer 26 mit Schrägen versehen, sie ermöglichen das Ausrasten in einer der Anschlagstellungen, der Fahr- bzw. der Parkposition. In diesem Fall erfolgt eine Relativbewegung zwischen dem Antriebsgehäuse 8 des Antriebs und dem Spiegelfuß 3 entlang einer Schwenkachse des Außenrückblickspiegels. Diese Relativbewegung ist vom Mikroschalter 9, der als Tastschalter ausgebildet ist, erkennbar, weil er nur im eingerasteten Zustand der Rastmittel zwischen Spiegelfuß 3 und dem Schneckenrad des Untersetzungsgetriebes 15 vom Spiegelfuß 3 beaufschlagt wird.

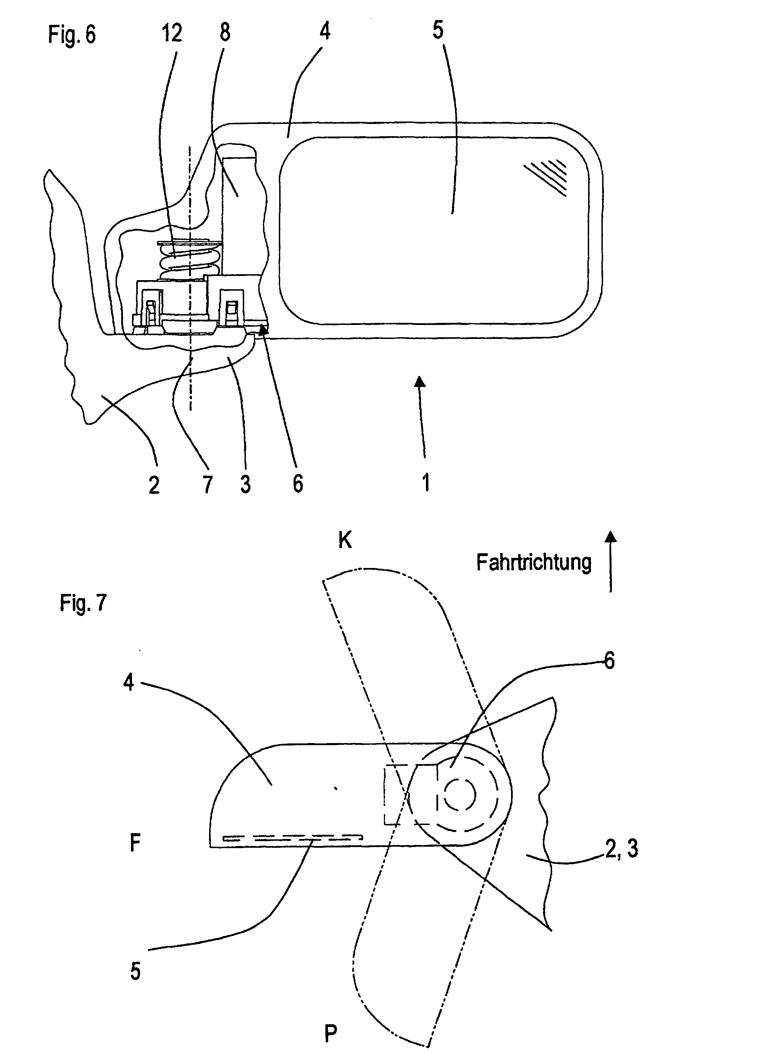

Fig. 6 zeigt einen Außenrückblickspiegel 1 mit einem Spiegelglas 5, einem Spiegelkopf 4 mit dem der Antrieb 6 fest verbunden ist, während er unter der Kraft einer Druckfeder 12 mit dem Spiegelfuß 3 verrastet ist. DerAußenrückblickspiegel ist motorisch und durch eine von außen auf den Spiegelkopf 4 einwirkende Kraft um die Schwenkachse 7 schwenkbar. Bei motorischer Verstellung bleiben die Rastmittel 13 im eingerasteten Zustand während sie bei Einwirkung einer äußeren Kraft auf den Spiegelkopf 4 aufgrund des selbsthemmenden Untersetzungsgetriebes 15 ausrasten. Beim Ausrasten verschiebt sich der Spiegelkopf 4 gegenüber dem Spiegelfuß 3 gegen die Kraft der Druckfeder in Richtung der Schwenkachse und gleitet dabei über die Schrägen der Rastmittel 13 und der Fahrwegbegrenzer 26. Der Spiegelfuß 3 ist fest mit dem Kraftfahrzeug 2 verbunden.

Fig. 7 zeigt die möglichen Positionen des Außenrückblickspiegels. Motorisch läßt sich der Spiegelkopf 4 zwischen der Fahrposition F und der Parkstellung P bewegen. Durch eine äußere Kraft kann der Spiegelkopf 4 auch eine Stellung K in Fahrtrichtung oder eine Zwischenstellung erreichen. Das Spiegelglas 5 ist in der Regel durch einen Zusatzantrieb um zwei senkrecht zueinander stehenden Achsen verstellbar.

### Bezugszeichenliste

- 1: Außenrückblickspiegel
- 2: Kraftfahrzeug
- 3: Spiegelfuß
- 4: Spiegelkopf
- 5: Spiegelglas
- 6: Antrieb
- 7: Schwenkachse
- 8: Antriebsgehäuse
- 9: elektromechanisches/elektronisches Mittel
- 10: erste Steckerbuchse (für Elektromotor)
- 11: zweite Steckerbuchse (für elektronische Mittel)
- 12: Druckfeder
- 13: Rastmittel
- 14: Elektromotor
- 15: Untersetzungsgetriebe
- 16: erste Leitbleche
- 17: zweite Leitbleche
- 18: Schnappmittel
- 19: Schnappmittel
- 20: erstes Antriebsgehäuseteil
- 21: zweites Antriebsgehäuseteil
- 22: drittes Antriebsgehäuseteil
- 23: viertes Antriebsgehäuseteil
- 24: Schiebeverbindung
- 25: Kronradverzahnung
- 26: Fahrwegbegrenzer
- 27: Bewegungsspielraum
- 28: Tastschalter
- 29: Ausnehmung
- 30: Steckerzunge
- 31: Steckerzunge
- 32: Motoransatz
- 33: Ausnehmung
- 34: Schnappring
- 35: Schnappnasen

## Patentansprüche

1. Außenrückblickspiegel (1) für ein Kraftfahrzeug (2), mit einem am Kraftfahrzeug (2) zu befestigenden Spiegelfuß (3), einem ein Spiegelglas (5) tragenden, um eine Schwenkachse (7) schwenkbaren Spiegelkopf (4), der durch einen in einem mehrteiligen Antriebsgehäuse (8) angeordneten selbsthemmenden Antrieb (6) antreibbar ist, bestehend aus einem axial in Bezug auf das Antriebsgehäuse (8) geringfügig in Achsrichtung verschiebbaren Elektromotor (14), dessen Ausgangswelle getrieblich mit einem Untersetzungsgetriebe (15) in Eingriff ist, dessen Ausgangszahnrad über ausrastbare Rastmittel (13) unter der Kraftwirkung einer Druckfeder (12) mit dem Spiegelfuß in Eingriff gehalten ist, wobei der Spiegelkopf unter der Einwirkung einer äußeren Kraft aus einer Gebrauchslage (F bis P) um die Schwenkachse (7) an das Kraftfahrzeug (2) anklappbar ist, wobei der Spiegelkopf (4) durch die ausrastbaren Rastmittel (13) mitnehmbar ist und dabei gegenüber dem Spiegelfuß (3) entlang der Schwenkachse (7) eine Relatiwerschiebung ausführen kann, die durch ein im Antriebsgehäuse (8) angeordnetes elektromechanisches oder elektronisches Mittel (9) erkennbar ist und die Motoranschlüsse an einer Vielzahl von unterschiedlichen Stellen auf einer Umfangslinie des Antriebsgehäuses (8) aus diesem herausführbar sind, **dadurch gekennzeichnet, dass** der Antrieb (6) über eine erste Steckerbuchse (10), die Bestandteil eines ersten Teils (20) des Antriebsgehäuses (8) ist, und das elektromechanische oder elektronische Mittel (9) über eine zweite Steckerbuchse (11), die Bestandteil eines zweiten Teils (21) des Antriebsgehäuses (8) ist, mit einer Steuerung im Kraftfahrzeug elektrisch verbindbar sind, wobei die erste Steckerbuchse (10) über erste Leitbleche (16) mit dem Elektromotor (14) und die zweite Steckerbuchse (11) über zweite Leitbleche (17) mit dem elektromechanischen oder elektronischen Mittel (9) elektrisch verbunden ist, die erste Steckerbuchse (10) in Bezug auf die zweite Steckerbuchse (11) in einer Vielzahl von unterschiedlichen Stellungen montierbar ist und die Leitbleche (16) zwischen der ersten Steckerbuchse (10) und dem Elektromotor (14) in Achsrichtung des Elektromotors (14) nachgiebig sind.

2. Außenrückblickspiegel nach Anspruch 1, **dadurch gekennzeichnet, dass** die unterschiedlichen Stellungen zwischen den beiden Steckerbuchsen (10, 11) durch zwischen zwei Teilen des Antriebsgehäuses vorgesehenen Verzahnungen (25) definiert sind.

3. Außenrückblickspiegel nach Anspruch 1 oder 2, **dadurch gekennzeichnet, dass** das erste Antriebsgehäuseteil (20) an einem dritten Antriebsgehäuseteil (22) über eine Kronradverzahnung (25) anliegt und dadurch gegen Verdrehung gesichert ist.

4. Außenrückblickspiegel nach Anspruch 1, 2 oder 3, **dadurch gekennzeichnet, dass** das erste Antriebsgehäuseteil (20) am dritten Antriebsgehäuseteil (22) über Schnappmittel gehalten ist, die an beliebigen Stellen um das Antriebsgehäuse einschnappbar sind.

5. Außenrückblickspiegel nach Anspruch 1, 2, 3 oder 4, **dadurch gekennzeichnet, dass** das Antriebsgehäuse (8) aus vier Antriebsgehäuseteilen (20, 21, 22, 23) besteht, wobei das erste Antriebsgehäuseteil (20) mit der ersten Steckerbuchse (10) einstückig ist, das zweite Antriebsgehäuseteil (21) mit der zweiten Steckerbuchse (11) einstückig ist und ein viertes Antriebsgehäuseteil (23) über eine Schiebeverbindung (24) mit dem ersten Antriebsgehäuseteil (20) verbunden ist.

6. Außenrückblickspiegel nach Anspruch 5, **dadurch gekennzeichnet, dass** das vierte Antriebsgehäuseteil (23) mit dem dritten Antriebsgehäuseteil (22) über eine Kronradverzahnung (25) in Eingriff ist.

7. Außenrückblickspiegel nach einem der Ansprüche 1 bis 6 **dadaurch gekennzeichnet,** dass das zweite Antriebsgehäuseteil (21) am dritten Antriebsgehäuseteil (22) über Schnappmittel (19) gehalten ist.

8. Außenrückblickspiegel nach Anspruch 1, 2, 5, 6 oder 7, **dadurch gekennzeichnet, dass** das vierte Antriebsgehäuseteil (23) am dritten Antriebsgehäuseteil (22) über Schnappmittel (18) gehalten ist.

9. Außenrückblickspiegel nach Anspruch 1, 2, 3, 4, 5, 6, 7 oder 8, **dadurch gekennzeichnet, dass** die Verbindungen zwischen den Leitblechen (16, 17) und dem Elektromotor (14) bzw. dem elektromechanischen oder elektronischen Mittel (9) Klemmverbindungen sind.

10. Außenrückblickspiegel nach Anspruch 1, 2, 3, 4, 5, 6, 7, 8 oder 9, **dadurch gekenneichnet, dass** das elektomechanische oder elektronische Mittel (9) ein Mikroschalter ist.

11. Außenrückblickspiegel nach zumindest einem der vorhergehenden Ansprüche, **dadurch gekennzeichnet, dass** die erste und die zweite Steckerbuchse (10, 11) so ausgebildet sind, dass sie mit identischen Anschlusssteckem verbindbar sind.

12. Außenrückblickspiegel nach zumindest einem der vorhergehenden Ansprüche, **dadurch gekennzeichnet, dass** durch die Formgebung der Steckerbuchsen (10, 11) und der zugehörigen Anschlussstecker jeweils nur eine Zuordnung möglich ist.

13. Außenrückblickspiegel nach zumindest einem der vorhergehenden Ansprüche, **dadurch gekennzeichnet, dass** jede Steckerbuchse (10, 11) zwei Anschlusspins aufweist.

14. Außenrückblickspiegel nach zumindest einem der vorhergehenden Ansprüche, **dadurch gekennzeichnet, dass** die Steckrichtung der ersten Steckerbuchse (10) rechtwinklig zur Steckrichtung des zweiten Steckerschachts (11) verläuft.

15. Außenrückblickspiegel nach zumindest einem der vorhergehenden Ansprüche, **dadurch gekennzeichnet, dass** die Steckrichtung der ersten Steckerbuchse (10) rechtwinklig zur Motorachse des Elektromotors (14) verläuft.

16. Außenrückblickspiegel nach zumindest einem der vorhergehenden Ansprüche, **dadurch gekennzeichnet, dass** die Steckrichtung der zweiten Steckerbuchse (11) parallel oder antiparallel zur Motorachse des Elektromotors (14) verläuft.

17. Außenrückblickspiegel nach zumindest einem der vorhergehenden Ansprüche, **dadurch gekennzeichnet, dass** die Motorachse parallel zur Schwenkachse des Außenrückblickspiegels des Elektromotors (14) verläuft.

18. Außenrückblickspiegel nach zumindest einem der vorhergehenden Ansprüche, **dadurch gekennzeichnet, dass** das elektromechanische oder elektronische Mittel (9) formschlüssig im Antriebsgehäuse (8) gehalten ist.

## Claims

1. An exterior rear view mirror (1) for a motor vehicle (2), comprising a mirror base (3) for attachment to the motor vehicle (2), a mirror head (4) carrying a mirror glass (5) and adapted to swivel about a swivel axis (7), which mirror head may be actuated by means of a self-locking actuator (6) arranged in a multiple-part actuator housing (8) and consisting of an electric motor (14), displaceable slightly in the axial direction axially in relation to the actuator housing (8), the output shaft of which is in geared engagement with a reduction gear (15) whose output gear wheel is held in engagement with the mirror base via disengageable detent means (13) under the action of force of a compression spring (12), the mirror head being adapted to fold from an operative position (F to P) against the motor vehicle (2) about the swivel axis (7) under the effect of an external force, the mirror head (4) being entrainable by means of the disengageable detent means (13) and thereupon being able to perform a relative displacement in relation to the mirror base (3) along the swivel axis (7), the said displacement being detectable by means of an electromechanical or electronic means (9) arranged in the actuator housing (8), and the motor connections at a plurality of different locations on a circumferential line of the actuator housing (8) being guidable out of the said housing, **characterised in that** the actuator (6), via a first plug socket (10) which is a component part of a first part (20) of the actuator housing (8), and the electromechanical or electronic means (9), via a second plug socket (11) which is a component part of a second part (21) of the actuator housing (8), are electrically connectible to a control in the motor vehicle, the first plug socket (10) being electrically connected to the electric motor (14) via first lead plates (16) and the second plug socket (11) to the electromechanical or electronic means (9) via second lead plates (17), the first plug socket (10) being mountable in a plurality of different positions in relation to the second plug socket (11), and the lead plates (16) between the first plug socket (10) and the electric motor (14) being flexible in the axial direction of the electric motor (14).

2. An exterior rear view mirror according to Claim 1, **characterised in that** the different positions between the two plug sockets (10, 11) are defined by teeth (25) provided between two parts of the actuator housing.

3. An exterior rear view mirror according to Claim 1 or 2, **characterised in that** the first actuator housing part (20) adjoins a third actuator housing part (22) by way of crown wheel teeth (25) and is thereby secured against rotation.

4. An exterior rear view mirror according to Claim 1, 2 or 3, **characterised in that** the first actuator housing part (20) is held on the third actuator housing part (22) by way of snap-action means which may be snapped in place at any locations around the actuator housing.

5. An exterior rear view mirror according to Claim 1, 2, 3 or 4, **characterised in that** the actuator housing (8) is composed of four actuator housing parts (20, 21, 22, 23), the first actuator housing part (20) being as one piece with the first plug socket (10), the second actuator housing part (21) being as one piece with the second plug socket (11), and a fourth actuator housing part (23) being connected to the first actuator housing part (20) via a sliding connection (24).

6. An exterior rear view mirror according to Claim 5, **characterised in that** the fourth actuator housing part (23) is in engagement with the third actuator housing part (22) by way of crown wheel teeth (25).

7. An exterior rear view mirror according to one of Claims 1 to 6, **characterised in that** the second actuator housing part (21) is held on the third actuator housing part (22) by way of snap-action means (19).

8. An exterior rear view mirror according to Claim 1, 2, 5, 6 or 7, **characterised in that** the fourth actuator housing part (23) is held on the third actuator housing part (22) by way of snap-action means (18).

9. An exterior rear view mirror according to Claim 1, 2, 3, 4, 5, 6, 7 or 8, **characterised in that** the connections between the lead plates (16, 17) and the electric motor (14) or the electromechanical or electronic means (9) are clamped connections.

10. An exterior rear view mirror according to Claim 1, 2, 3, 4, 5, 6, 7, 8 or 9, **characterised in that** the electromechanical or electronic means (9) is a microswitch.

11. An exterior rear view mirror according to at least one of the preceding claims, **characterised in that** the first and the second plug socket (10, 11) are designed such that they are connectible to identical attachment plugs.

12. An exterior rear view mirror according to at least one of the preceding claims, **characterised in that** because of the shaping of the plug sockets (10, 11) and the associated attachment plugs, only one assignment thereof in each case is possible.

13. An exterior rear view mirror according to at least one of the preceding claims, **characterised in that** each plug socket (10, 11) has two connecting pins.

14. An exterior rear view mirror according to at least one of the preceding claims, **characterised in that** the plug-in direction of the first plug socket (10) extends at right angles to the plug-in direction of the second plug shaft (11).

15. An exterior rear view mirror according to at least one of the preceding claims, **characterised in that** the plug-in direction of the first plug socket (10) extends at right angles to the motor axis of the electric motor (14).

16. An exterior rear view mirror according to at least one of the preceding claims, **characterised in that** the plug-in direction of the second plug socket (11) extends parallel or anti-parallel to the motor axis of the electric motor (14).

17. An exterior rear view mirror according to at least one of the preceding claims, **characterised in that** the motor axis [of the electric motor 14]¹ extends parallel to the swivel axis of the exterior rear view mirror.

18. An exterior rear view mirror according to at least one of the preceding claims, **characterised in that** the electromechanical or electronic means (9) is held positively in the actuator housing (8).

## Revendications

1. Rétroviseur extérieur (1) pour un véhicule automobile (2), comportant un pied (3) à fixer sur le véhicule automobile (2), une tête (4) portant un verre de miroir (5) et mobile en pivotement autour d'un axe de pivotement (7) et susceptible d'être entraînée par un entraînement autobloquant (6) agencé dans un carter d'entraînement (8) en plusieurs pièces, constitué par un moteur électrique (14) mobile légèrement en direction axiale axialement par rapport au carter d'entraînement (8), moteur dont l'arbre de sortie engrène en termes d'entraînement avec un mécanisme démultiplicateur (15) dont l'engrenage de sortie est maintenu en engrènement avec le pied via des moyens d'enclenchement déclenchables (13) sous l'action d'un ressort de compression (12), la tête pouvant être rabattue à partir d'une position d'utilisation (F à P) autour de l'axe de pivotement (7) contre le véhicule automobile (2) par action d'une force extérieure; la tête (4) pouvant être entraînée par les moyens d'enclenchement déclenchables (13) et pouvant effectuer une translation relative par rapport au pied (3) le long de l'axe de pivotement (7), translation qui peut être reconnue par un moyen électromécanique ou électronique agencé dans le carter d'entraînement (8), et les raccords du moteur pouvant être menés vers l'extérieur du carter d'entraînement (8) à une multitude d'emplacements différents sur une ligne périphérique de celui-ci, **caractérisé en ce que** l'entraînement (6) peut être connecté électriquement à une commande dans le véhicule automobile via une première fiche femelle (10) qui fait partie d'une première pièce (20) du carter d'entraînement (8), et le moyen électromécanique ou électronique (9) peut être connecté électriquement à ladite commande via une deuxième fiche femelle (11) qui fait partie d'une deuxième pièce (21) du carter d'entraînement (8), la première fiche femelle (10) étant connectée électriquement au moteur électrique (14) via des premières tôles conductrices (16) et la deuxième fiche femelle (11) étant connectée électriquement au moyen électromécanique ou électronique (9) via des deuxièmes tôles conductrices (17), la première fiche femelle (10) pouvant être montée dans une multitude de positions différentes par rapport à la deuxième fiche femelle (11), et les tôles conductrices (16) entre la première fiche femelle (10) et le moteur électrique (14) étant flexibles en direction axiale du moteur électrique (14).

2. Rétroviseur extérieur selon la revendication 1, **caractérisé en ce que** les positions différentes entre les deux fiches femelles (10, 11) sont définies par des dentures (25) prévues entre deux pièces du carter d'entraînement.

3. Rétroviseur extérieur selon l'une ou l'autre des revendications 1 et 2, **caractérisé en ce que** la première pièce de carter (20) s'appuie contre une troisième pièce de carter (22) via une couronne à denture de chant (25) et est ainsi bloquée à l'encontre d'une rotation.

4. Rétroviseur selon l'une des revendications 1, 2 ou 3, **caractérisé en ce que** la première pièce de carter (20) est maintenue sur la troisième pièce de carter (22) via des moyens d'encliquetage qui peuvent venir s'encliqueter à des emplacements quelconques autour du carter d'entraînement.

5. Rétroviseur extérieur selon l'une des revendications 1, 2, 3 ou 4, **caractérisé en ce que** le carter d'entraînement (8) est constitué par quatre pièces de carter (20, 21, 22, 23), la première pièce de carter (20) étant d'un seul tenant avec la première fiche femelle (10), la deuxième pièce de carter (21) étant d'un seul tenant avec la deuxième fiche femelle (11) et une quatrième pièce de carter (23) étant reliée à la première pièce de carter (20) via une liaison à coulissement (24).

6. Rétroviseur extérieur selon la revendication 5, **caractérisé en ce que** la quatrième pièce de carter (23) est en engrènement avec la troisième pièce de carter (22) via une couronne à denture de chant (25).

7. Rétroviseur extérieur selon l'une des revendications 1 à 6, **caractérisé en ce que** la deuxième pièce de carter (21) est maintenue sur la troisième pièce de carter (22) via des moyens d'encliquetage (19).

8. Rétroviseur extérieur selon l'une des revendications 1, 2, 5, 6 ou 7, **caractérisé en ce que** la quatrième pièce de carter (23) est maintenue sur la troisième pièce de carter (22) via des moyens d'encliquetage (18).

9. Rétroviseur extérieur selon l'une des revendications 1, 2, 3, 4, 5, 6, 7
ou 8, **caractérisé en ce que** les connexions entre les tôles conductrices (16, 17) et le moteur électrique (14) ou le moyen électromécanique ou électronique (9) sont des jonctions par serrage.

10. Rétroviseur extérieur selon l'une des revendications 1, 2, 3, 4, 5, 6, 7, 8 ou 9, **caractérisé en ce que** le moyen électromécanique ou électronique (9) est un microrupteur.

11. Rétroviseur extérieur selon l'une au moins des revendications précédentes, **caractérisé en ce que** la première et la deuxième fiche femelle (10, 11) sont réalisées de manière à pouvoir être connectées à des bornes de raccordement identiques.

12. Rétroviseur extérieur selon l'une au moins des revendications précédentes, **caractérisé en ce que** grâce à la configuration des fiches femelles (10, 11) et des bornes de raccordement associées, une seule association respective est possible.

13. Rétroviseur extérieur selon l'une au moins des revendications précédentes, **caractérisé en ce que** chaque fiche femelle (10, 11) comprend deux tiges de raccordement.

14. Rétroviseur extérieur selon l'une au moins des revendications précédentes, **caractérisé en ce que** la direction d'enfichage de la première fiche femelle (10) s'étend à angle droit par rapport à la direction d'enfichage de la deuxième fiche femelle (11).

15. Rétroviseur extérieur selon l'une au moins des revendications précédentes, **caractérisé en ce que** la direction d'enfichage de la première fiche femelle (10) s'étend à angle droit par rapport à l'axe du moteur électrique (14).

16. Rétroviseur extérieur selon l'une des revendications précédentes, **caractérisé en ce que** la direction d'enfichage de la deuxième fiche femelle (11) s'étend parallèlement ou anti-parallèlement à l'axe du moteur électrique (14).

17. Rétroviseur extérieur selon l'une des revendications précédentes, **caractérisé en ce que** l'axe moteur s'étend parallèlement à l'axe de pivotement du rétroviseur extérieur du moteur électrique (14).

18. Rétroviseur extérieur selon l'une des revendications précédentes, **caractérisé en ce que** le moyeu électromécanique ou électronique (9) est maintenu en coopération de formes dans le carter d'entraînement (8).
